# NEUE EUROPÄISCHE PATENTSCHRIFT

(11) **EP 3 149 095 B2**
(45) Veröffentlichungstag und Bekanntmachung des Hinweises auf die Entscheidung über den Einspruch: **31.12.2025**
(45) Hinweis auf die Patenterteilung: 28.02.2018
(21) Anmeldenummer: 15723012.9
(22) Anmeldetag: 13.05.2015
(51) Int. Cl.: C08G 77/26, C08G 77/458, C08G 77/00, C08G 77/46, C09D 183/10, C09D 183/12

(54) **VERNETZBARE MASSEN AUF BASIS VON ORGANYLOXYSILANTERMINIERTEN POLYMEREN**
CROSS-LINKABLE MASSES BASED ON ORGANYLOXYSILANE-TERMINATED POLYMERS
MATIÈRES RÉTICULABLES À BASE DE POLYMÈRES À TERMINAISON ORGANYLOXYSILANE

(30) Priorität: 30.05.2014 DE 102014210309
(43) Veröffentlichungstag der Anmeldung: 05.04.2017
(73) Patentinhaber: Wacker Chemie AG, 81671 München (DE)
(72) Erfinder: STANJEK, Volker, 84539 Ampfing (DE); BAUER, Andreas, 84375 Kirchdorf (DE); ZANDER, Lars, 84503 Altötting (DE)
(74) Vertreter: Renner, Thomas
(86) Internationale Anmeldenummer: PCT/EP2015/060645
(87) Internationale Veröffentlichungsnummer: WO 2015/180968

(56) Entgegenhaltungen:
- DE-A1- 102011 081 264
- DE-A1- 102012 201 734

## Beschreibung

Die Erfindung betrifft vernetzbare Massen von silanvernetzenden Prepolymeren, Verfahren zu deren Herstellung und deren Verwendung als Kleb- und Dichtstoffe, insbesondere zum Verkleben von Substraten.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Klebstoffen, insbesondere von elastischen Klebesystemen.

So zeigen Klebstoffe auf Basis von alkoxysilanvernetzenden Polymeren im ausgehärteten Zustand sehr gute mechanische Eigenschaften, da sie sowohl reißfest als auch hochelastisch sein können. Ein weiterer entscheidender Vorteil silanvernetzender Systeme gegenüber zahlreichen anderen Kleb- und Dichtstofftechnologien (z.B. gegenüber isocyanatvernetzenden Systemen) ist die toxikologische Unbedenklichkeit der Prepolymere. Dabei werden in vielen Anwendungen einkomponentige Systeme (1K-Systeme) bevorzugt, die bei Kontakt mit Luftfeuchtigkeit aushärten.

Nahezu sämtliche silanvernetzenden Kleb- und Dichtstoffe enthalten sogenannte Wasserfänger. Diese sind für eine kostengünstige Produktion meist unverzichtbar, da diese in der Regel nicht unter perfekten Schutzgasbedingungen durchgeführt wird, so dass während der Herstellung und Abfüllung Feuchtigkeitsspuren in das Produkt eingetragen werden. Zudem bringen auch die in sogenannten "gefüllten Systemen" enthaltenen festen Füllstoffe stets eine gewisse, an die Partikeloberflächen absorbierte Feuchtigkeitsmenge mit. Ohne Wasserfänger würden diese Wasserspuren direkt zu einer Kondensation zumindest eines Teils der Polymermoleküle und damit zu einer unerwünschten Verstrammung der resultierenden Masse führen.

Zudem sind die meisten Gebinde, in denen Kleb- und Dichtstoffe gelagert werden, weder absolut wasserdicht noch bestehen sie aus Materialien, die eine Diffusion von Wasser vollständig unterbinden würden. Auch hier sind Wasserfänger zur Gewährleistung einer hinreichenden Lagerstabilität unverzichtbar.

Wasserfänger wirken, indem sie eine chemische Reaktion mit den in das jeweilige Produkt eingetragenen Wasserspuren eingehen, so dass diese nicht mehr für eine Reaktion mit den silanvernetzenden Polymeren zur Verfügung stehen.

In silanvernetzenden Systemen wird dabei fast immer Vinyltrimethoxysilan als Wasserfänger eingesetzt. Stellvertretend für zahllose Schriften, in denen diese Praxis beschrieben wird, sei hier die EP 0 918 062 A1 genannt, die durch eine übersichtliche Gliederung und Beschreibung typischer Inhaltsstoffe von silanvernetzenden Kleb- und Dichtstoffen auffällt.

Grund für die Unverzichtbarkeit von Vinyltrimethoxysilan in nahezu sämtlichen praxisrelevanten silanvernetzenden Kleb- und Dichtstoffformulierungen ist neben der preisgünstigen Verfügbarkeit vor allem die hohe Reaktivität dieses Silans. So verfügt Vinyltrimethoxysilan in wässriger Lösung über eine Halbwertszeit von gerade einmal 855 s bei pH 7 bzw. <10 s bei pH 9. D.h. nach Ablauf dieser Zeitspanne haben mehr als die Hälfte aller Silanmoleküle mit Wasser reagiert. Halbwertszeiten von Silanen ohne Si-gebundene Vinylgruppe liegen hier deutlich höher, so weist z.B. Methyltrimethoxysilane ein Halbwertzeit von 3360 s bei pH 7 und 111 s bei pH 9 auf, 3-Methacryloxypropyltrimethoxysilan besitzt Halbwertzeiten von 8 500 s bei pH 7 und 185 min bei pH 9, und die Halbwertszeiten des 3-Glycidoxypropyltrimethoxysilans liegen bei 6 500 s bei pH 7 und 240 s bei pH 9.

Da auch die meisten silanterminierten organischen Polymere über Silylgruppen verfügen, die über einen Propylspacer an den Polymerrest gebunden sind, sind ihre Reaktivitäten mit denen der beiden letztgenannten ebenfalls propylgespacerten Polymere vergleichbar. Damit besitzt Vinyltrimethoxysilan gegenüber Wasser nicht nur eine höhere Reaktivität als fast alle anderen Silane, sondern auch eine höhere Reaktivität als das silanvernetzende Polymer, das es vor einer vorzeitigen Reaktion mit Feuchtigkeit schützen soll. Dies ist eine sehr wichtige Eigenschaft für einen Wasserfänger.

Noch reaktiver als Vinyltrimethoxysilan sind nur die sogenannten alpha-Silane, wie sie z.B. in EP 1414909 A beschrieben werden. Diese verfügen über eine reaktive Alkoxysilylgruppe, die durch einen Methylenspacer mit einem benachbarten Heteroatom verbunden sind, was - ähnlich wie die Vinylgruppe des Vinyltrimethoxysilans - zu einer erheblichen Steigerung der Reaktivität der entsprechenden Silylgruppe führt. Allerdings sind die alpha-Silane auf Grund ihrer aufwendigen Synthese wesentlich teurer als Vinyltrimethoxysilan und stellen daher keine wirtschaftlich sinnvolle Alternative dar.

Doch trotz seiner extrem weiten Verbreitung weist das Vinyltrimethoxysilan auch Nachteile auf. So ist dieses Silan mit einem Siedepunkt von 122°C bei 1013 mbar relativ leichtflüchtig und besitzt zudem einen Geruch, der von einem Teil der Anwender als sehr unangenehm empfunden wird. Auch ist der Flammpunkt gemessen nach ISO 13736 mit nur 25°C relativ niedrig, was dessen Verarbeitbarkeit erschwert. Doch trotz dieser Nachteile überwiegen bislang die Vorteile wie der niedrige Preis aber auch die guten mechanischen Eigenschaften der entsprechenden Massen nach der Aushärtung, die das Vinyltrimethoxysilan bislang in fast allen gängigen Formulierungen von Kleb- und Dichtstoffen unverzichtbar machen.

Aufgabe der Erfindung war daher die Suche nach Wasserfängern, welche die Nachteile des Standes der Technik nicht aufweisen.

Gegenstand der Erfindung sind vernetzbare Massen enthaltend
(A) 100 Gewichtsteile Verbindungen der Formel

   Y-[(CR¹₂)_{b}-SiRₐ(OR²)₃₋ₐ]ₓ (I),

   wobei
   - Y: einen x-wertigen, über Stickstoff, Sauerstoff, Schwefel oder Kohlenstoff gebundenen Polymerrest bedeutet,
   - R: gleich oder verschieden sein kann und einen einwertigen, gegebenenfalls substituierten Kohlenwasserstoffrest darstellt,
   - R¹: gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
   - R²: gleich oder verschieden sein kann und Wasserstoffatom oder einen einwertigen, gegebenenfalls substituierten Kohlenwasserstoffrest darstellt,
   - x: eine ganze Zahl von 1 bis 10, bevorzugt 1, 2 oder 3, besonders bevorzugt 1 oder 2, ist,
   - a: gleich oder verschieden sein kann und 0, 1 oder 2, bevorzugt 0 oder 1, ist und
   - b: gleich oder verschieden sein kann und eine ganze Zahl von 1 bis 10, bevorzugt 1, 3 oder 4, besonders bevorzugt 1 oder 3, insbesondere 1, ist,
(B) mindestens 0,2 Gewichtsteile Phenyltrialkoxysilan der Formel

   C₆H₅-Si(OR³)₃ (II),

   wobei
   - R³: gleich oder verschieden sein kann und Methyl- oder Ethylrest bedeutet,
(C) 0,1 bis 30 Gewichtsteile stickstoffhaltige Organosiliciumverbindungen enthaltend Einheiten der Formel

   DₑSi(OR⁵)_{d}R⁴_{c}O_{(4-e-d-c)/2} (III),

   worin
   - R⁴: gleich oder verschieden sein kann und einen einwertigen, gegebenenfalls substituierten SiC-gebundenen, von Stickstoff freien organischen Rest bedeutet,
   - R⁵: gleich oder verschieden sein kann und Wasserstoffatom oder gegebenenfalls substituierte Kohlenwasserstoffreste bedeutet,
   - D: gleich oder verschieden sein kann und einen einwertigen, SiC-gebundenen Rest mit mindestens einem nicht an eine Carbonylgruppe (C=O) gebundenen Stickstoffatom bedeutet,
   - c: 0, 1, 2 oder 3, bevorzugt 0 oder 1, besonders bevorzugt 0, ist,
   - d: 1, 2 oder 3, bevorzugt 2 oder 3, besonders bevorzugt 3, ist und
   - e: 0, 1, 2, 3 oder 4, bevorzugt 1, ist,

   mit der Maßgabe, dass die Summe aus c+d+e kleiner oder gleich 4 ist und pro Molekül mindestens ein Rest D anwesend ist,
   wobei die vernetzbare Masse weniger als 0,5 Gew.-% Vinyltrimethoxysilan, bezogen auf das Gesamtgewicht der vernetzbaren Masse, enthält,
   wobei es sich bei den Massen um solche enthaltend
      (A) 100 Gewichtsteile Verbindungen der Formel (I),
      (B) 0,5 bis 50 Gewichtsteile Phenyltrimethoxysilan,
      (C) 0,2 bis 25 Gewichtsteile stickstoffhaltige Organosiliciumverbindungen enthaltend Einheiten der Formel (III), gegebenenfalls
      (D) Weichmacher,
         gegebenenfalls
      (E) Füllstoffe,
         gegebenenfalls
      (F) Haftvermittler,
         gegebenenfalls
      (G) Phenylsiliconharze
         gegebenenfalls
      (H) Katalysatoren
         gegebenenfalls
      (I) Additive und
         gegebenenfalls
      (J) Zuschlagstoffe
         handelt,
   wobei die erfindungsgemäßen Massen weniger als 0,3 Gew.-% Vinyltrimethoxysilan, bezogen auf das Gesamtgewicht der erfindungsgemäßen Masse, enthalten.

Der Erfindung liegt die überraschende Entdeckung zugrunde, dass Phenyltrimethoxysilan (B) in der Lage ist, Vinyltrimethoxysilan als Wasserfänger zu ersetzen, ohne die Eigenschaften der resultierenden Masse zu verschlechtern.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom und Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Als Polymere, welche dem Polymerrest Y zugrunde liegen, sind im Sinne der vorliegenden Erfindung alle Polymere zu verstehen, bei denen mindestens 50%, bevorzugt mindestens 70%, besonders bevorzugt mindestens 90%, aller Bindungen in der Hauptkette Kohlenstoff-Kohlenstoff-, Kohlenstoff-Stickstoff- oder Kohlenstoff-Sauerstoff-Bindungen sind.

Beispiele für Polymerreste Y sind Polyester-, Polyether-, Polyurethan-, Polyalkylen- und Polyacrylatreste.

Bei Polymerrest Y handelt es sich vorzugsweise um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymetacrylate; Vinylpolymer und Polycarbonate enthalten und die vorzugsweise über -O-C(=O)-NH-, -NH-C(=O)O-, -NH-C(=O)-NH-, -NR'-C(=O)-NH-, NH-C(=O)-NR'-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, -NR'- an die Gruppe bzw. Gruppen -[(CR¹₂)_{b}-SiRₐ(OR²)₃₋ₐ] gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Beispiele für Reste R' sind Cyclohexyl-, Cyclopentyl-, n- und iso-Propyl-, n-, iso- und t-Butyl-, die diversen Sterioisomere des Pentylrests, Hexylrests oder Heptylrests sowie der Phenylrest.

Bei den Resten R" handelt es sich vorzugsweise um Alkylgruppen mit 1 bis 10 Kohlenstoffatomen, besonders bevorzugt um Methyl-, Ethyl- oder Propylreste.

Die Komponente (A) kann dabei die auf die beschriebene Weise angebundenen Gruppen -[(CR¹₂)_{b}-SiRₐ(OR²)₃₋ₐ] an beliebigen Stellen im Polymer aufweisen, wie etwa kettenständig und/oder endständig.

Bevorzugt handelt es sich bei Rest Y um Polyurethanreste oder Polyoxyalkylenreste, besonders bevorzugt um kettenförmige Polyurethanreste oder kettenförmige Polyoxyalkylenreste mit jeweils 0 bis 3 Verzweigungsstellen mit endständig angebundenen Gruppen -[(CR¹₂)_{b}-SiRₐ(OR²)₃₋ₐ], wobei als Verzweigungsstellen im Sinne der Erfindung alle Abzweigungen von der Hauptkette mit mehr als einem Kohlenstoffatom zu verstehen sind und die Reste und Indizes die oben genannten Bedeutungen haben.

Insbesondere handelt es sich bei Rest Y in Formel (I) um kettenförmige Polyurethanreste oder kettenförmige Polyoxyalkylenreste ohne Verzweigungsstellen mit endständig angebundenen Gruppen -[(CR¹₂)_{b}-SiRₐ(OR²)₃₋ₐ], wobei die Reste und Indizes die oben genannten Bedeutungen haben.

Bei den Polyurethanresten Y handelt es sich bevorzugt um solche, deren Kettenenden über -NH-C(=O)O-, -NH-C(=O)-NH-, -NR'-C(=O)-NH- oder -NH-C(=O)-NR'-, insbesondere über -O-C(=O)-NH- oder -NH-C(=O)-NR'-, an die Gruppe bzw. Gruppen -[(CR¹₂)_{b}-SiRₐ(OR²)₃₋ₐ] gebunden sind, wobei sämtliche Reste und Indizes eine der o.g. Bedeutungen haben. Die Polyurethanreste Y sind dabei vorzugsweise aus linearen oder verzweigten Polyoxyalkylenen, insbesondere aus Polypropylenglycolen, und Di- oder Polyisocyanaten herstellbar. Die Reste Y weisen dabei vorzugsweise mittlere Molmassen Mₙ (Zahlenmittel) von 400 bis 30 000 g/mol, bevorzugt von 4 000 bis 20 000 g/mol, auf. Geeignete Verfahren zur Herstellung einer entsprechenden Komponente (A) sowie auch Beispiele für die Komponente (A) selbst sind unter anderem in EP 1 093 482 B1 (Absätze [0014]-[0023], [0039]-[0055] sowie Beispiel 1 und Vergleichsbeispiel 1) oder EP 1 641 854 B1 (Absätze [0014]-[0035], Beispiele 4 und 6 sowie die Vergleichsbeispiele 1 und 2) beschrieben, die zum Offenbarungsgehalt der vorliegenden Anmeldung zu zählen sind.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Bei den Polyoxyalkylenresten Y handelt es sich bevorzugt um lineare oder verzweigte Polyoxyalkylenreste, besonders bevorzugt um Polyoxypropylenreste, deren Kettenenden vorzugsweise über -O-C(=O)-NH- oder -O- an die Gruppe bzw. Gruppen -[(CR¹₂)_{b}-SiRₐ(OR²)₃₋ₐ] gebunden sind, wobei die Reste und Indizes eine der oben genannten Bedeutungen haben. Vorzugsweise sind dabei mindestens 85%, besonders bevorzugt mindestens 90%, insbesondere mindestens 95%, aller Kettenenden über -O-C(=O)-NH- an die Gruppe -[(CR¹₂)_{b}-SiRₐ(OR²)₃₋ₐ] gebunden. Die Polyoxyalkylenreste Y weisen vorzugsweise mittlere Molmassen Mₙ von 4 000 bis 30 000 g/mol, bevorzugt von 8 000 bis 20 000 g/mol, auf. Geeignete Verfahren zur Herstellung einer entsprechenden Komponente (A) sowie auch Beispiele für die Komponente (A) selbst sind unter anderem in EP 1 535 940 B1 (Absätze [0005]-[0025] sowie Beispiele 1-3 und Vergleichsbeispiel 1-4) oder EP 1 896 523 B1 (Absätze [0008]-[0047]) beschrieben, die zum Offenbarungsgehalt der vorliegenden Anmeldung zu zählen sind.

Bei den Endgruppen der erfindungsgemäß eingesetzten Verbindungen (A) handelt es sich vorzugsweise um solche der allgemeinen Formeln

-NH-C(=O)-NR'-(CR¹₂)_{b}-SiRₐ(OR²)₃₋ₐ (IV),

-O-C(=O)-NH-(CR¹₂)_{b}-SiRₐ(OR²)₃₋ₐ (V)

oder

-O-(CR¹₂)_{b}-SiRₐ(OR²)₃₋ₐ (VI),

wobei die Reste und Indizes eine der oben dafür angegebenen Bedeutungen haben.

Sofern es sich bei den Verbindungen (A) um Polyurethane handelt, was bevorzugt ist, weisen diese vorzugsweise eine oder mehrere der Endgruppen

-NH-C(=O)-NR'-(CH₂)₃-Si(OCH₃)₃,

-NH-C(=O)-NR'-(CH₂)₃-Si(OC₂H₅)₃,

-O-C(=O)-NH-(CH₂)₃-Si(OCH₃)₃

oder

-O-C(=O)-NH-(CH₂)₃-Si(OC₂H₅)₃

auf,
wobei R' die oben genannte Bedeutung hat.

Sofern es sich bei den Verbindungen (A) um Polypropylenglycole handelt, was besonders bevorzugt ist, weisen diese vorzugsweise eine oder mehrere der Endgruppen

-O-(CH₂)₃-Si(CH₃)(OCH₃)₂,

-O-(CH₂)₃-Si(OCH₃)₃,

-O-C(=O)-NH-(CH₂)₃-Si(OC₂H₅)₃,

-O-C(=O)-NH-CH₂-Si(CH₃)(OC₂H₅)₂,

-O-C(=O)-NH-CH₂-Si (OCH₃)₃,

-O-C(=O)-NH-CH₂-Si(CH₃)(OCH₃)₂

oder

-O-C(=O)-NH-(CH₂)₃-Si(OCH₃)₃

auf,
wobei die beiden letztgenannten Endgruppen besonders bevorzugt werden.

Die mittleren Molekulargewichte Mₙ der Verbindungen (A) betragen vorzugsweise mindestens 400 g/mol, besonders bevorzugt mindestens 4 000 g/mol, insbesondere mindestens 10 000 g/mol, und vorzugsweise höchstens 30 000 g/mol, besonders bevorzugt höchstens 20 000 g/mol, insbesondere höchstens 19 000 g/mol.

Die Viskosität der Verbindungen (A) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20°C.

Die Viskosität von nicht pastösen Flüssigkeiten wird im Rahmen der vorliegenden Erfindung nach einer Temperierung auf 23°C mit einem DV 3 P-Rotationsviskosimeter von Fa. A. Paar (Brookfieldsysteme) unter Verwendung von Spindel 6 bei 5 Hz entsprechend der ISO 2555 bestimmt.

Die erfindungsgemäß eingesetzten Verbindungen (A) sind handelsübliche Produkte oder können nach in der Chemie gängigen Verfahren hergestellt werden.

Die Herstellung der Polymere (A) kann durch bekannte Verfahren erfolgen, wie Additionsreaktionen, wie z.B. der Hydrosilylierung, Michael-Addition, Diels-Alder-Addition oder Reaktionen zwischen isocyanatfunktionellen Verbindungen mit Verbindungen, die isocyanatreaktive Gruppen aufweisen.

Die erfindungsgemäß eingesetzte Komponente (A) kann nur eine Art von Verbindung der Formel (I) enthalten wie auch Gemische unterschiedlicher Arten von Verbindungen der Formel (I). Dabei kann die Komponente (A) ausschließlich Verbindungen der Formel (I) enthalten, in denen mehr als 90%, bevorzugt mehr als 95% und besonders bevorzugt mehr als 98%, aller an den Rest Y gebundenen Silylgruppen identisch sind. Es kann dann aber auch eine Komponente (A) eingesetzt werden, die zumindest zum Teil Verbindungen der Formel (I) enthält, bei denen an einen Rest Y unterschiedliche Silylgruppen gebunden sind. Schließlich können als Komponente (A) auch Gemische verschiedener Verbindungen der Formel (I) eingesetzt werden, in denen insgesamt mindestens 2 unterschiedliche Arten von an Reste Y gebundene Silylgruppen vorhanden sind, wobei jedoch sämtliche an jeweils einen Rest Y gebundenen Silylgruppen identisch sind.

Vorzugsweise enthalten die erfindungsgemäßen Massen Verbindungen (A) in Konzentrationen von höchstens 60 Gew.-%, besonders bevorzugt höchstens 40 Gew.-%, und vorzugsweise mindestens 10 Gew.-%, besonders bevorzugt mindestens 15 Gew.-%.

Bei der Komponente (B) handelt es sich um Phenyltrimethoxysilan.

Das erfindungsgemäß eingesetzte Phenyltrimethoxysilan weist einen Siedepunkt im Bereich von 210-212°C bei 1013 hPa auf und hat einen Flammpunkt von 96°C (gemessen nach ISO 3679).

Das erfindungsgemäß eingesetzte Phenyltrimethoxysilan weist Halbwertszeiten von 1330 s bei pH 7 und 72 s bei pH 9 auf.

Vorzugsweise enthalten die erfindungsgemäßen Massen Phenyltrimethoxysilan (B) in Mengen von 0,8 bis 30 Gewichtsteilen, insbesondere 1 bis 20 Gewichtsteilen, jeweils bezogen auf 100 Gewichtsteile Komponente (A).

Bei den in den erfindungsgemäßen Massen eingesetzten Organosiliciumverbindungen (C) kann es sich sowohl um Silane handeln, d.h. Verbindungen der Formel (III) mit c+d+e=4, als auch um Siloxane, d.h. Verbindungen enthaltend Einheiten der Formel (III) mit c+d+e≤3, wobei es sich bevorzugt um Silane handelt.

Beispiele für Rest R⁴ sind die für R angegebenen Beispiele.

Bei Rest R⁴ handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für gegebenenfalls substituierte Kohlenwasserstoffreste R⁵ sind die für Rest R angegebenen Beispiele.

Bei den Resten R⁵ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH (CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂N(CH₂)₃-, (C₄H₉)₂N(CH₂)₃-, (C₅H₁₁)₂N(CH₂)₃-, (C₆H₁₃) ₂N(CH₂)₃-, (C₇H₁₅)₂N(CH₂)₃-, H₂N(CH₂)-, H₂N(CH₂)₂NH(CH₂)-, H₂N(CH₂)₂NH(CH₂)₂NH(CH₂)-, CH₃NH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (C₃H₇)₂N(CH₂) -, (C₄H₉)₂N(CH₂)-, (C₅H₁₁)₂N(CH₂)-, (C₆H₁₃)₂N(CH₂)-, (C₇H₁₅)₂N(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-H₂N(CH₂)₂NH(CH₂)₃- und cyclo-C₆H₁₁NH (CH₂)₃-Rest.

Beispiele für die erfindungsgemäß gegebenenfalls eingesetzten Silane der Formel (III) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH) ₂CH₃, Phenyl-NH(CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH (CH₂)₃-Si(OC₂H₅)₂CH₃, Phenyl-NH(CH₂)₃-Si(OH)₃, Phenyl-NH(CH₂)₃-Si(OH)₂CH₃, HN((CH₂)₃-Si(OCH₃)₃)₂, HN((CH₂)₃-Si(OC₂H₅)₃)₂HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH(CH₂)-Si(OH)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Phenyl-NH(CH₂)-Si(OH)₃ und Phenyl-NH(CH₂)-Si(OH)₂CH₃ sowie deren Teilhydrolysate, wobei H₂N(CH₂)₃-Si(OCH₃)₃, H₂N(CH₂)₃-Si(OC₂H₅)₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ und cyclo-C₆H₁₁NH(CH₂)₃-Si(OCH₃)₂CH₃ sowie jeweils deren Teilhydrolysate bevorzugt und H₂N(CH₂)₃-Si(OCH₃)₃, H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃ sowie jeweils deren Teilhydrolysate besonders bevorzugt sind.

Die erfindungsgemäß eingesetzten stickstoffhaltigen Organosiliciumverbindungen (C) sind handelsübliche Produkte bzw. nach in der Chemie gängigen Verfahren herstellbar.

Vorzugsweise enthalten die erfindungsgemäßen Massen stickstoffhaltige Organosiliciumverbindungen (C) in Mengen von 0,3 bis 20 Gewichtsteilen, insbesondere 0,5 bis 15 Gewichtsteilen, jeweils bezogen auf 100 Gewichtsteile Komponente (A).

Die erfindungsgemäßen Massen enthalten vorzugsweise weniger als 0,1 Gew.-%, insbesondere weniger als 0,05 Gew.-% Vinyltrimethoxysilan, jeweils bezogen auf das Gesamtgewicht der erfindungsgemäßen Masse.

In einer besonders bevorzugten Ausführung der Erfindung ist die erfindungsgemäße Masse frei von Vinyltrimethoxysilan.

Die erfindungsgemäßen Massen enthalten vorzugsweise weniger als 0,3 Gew.-%, besonders bevorzugt weniger als 0,1 Gew.-%, insbesondere weniger als 0,05 Gew.-% jedweder Vinyltrialkoxysilane, jeweils bezogen auf 100 Gewichtsteile Komponente (A).

In einer besonders bevorzugten Ausführung der Erfindung ist die erfindungsgemäße Masse frei von sämtlichen Vinyltrialkoxysilanen.

Zusätzlich zu den eingesetzten Komponenten (A), (B) und (C) können die erfindungsgemäßen Massen alle weiteren Stoffe enthalten, die auch bisher in vernetzbaren Massen eingesetzt wurden und die unterschiedlich sind zu Komponenten (A), (B) und (C), wie z.B. nicht reaktive Weichmacher (D), Füllstoffe (E), Haftvermittler (F), Siliconharze (G), Katalysatoren (H), Additive (I) und Zuschlagstoffe (J).

Als nicht reaktive Weichmacher (D) im Rahmen der vorliegenden Erfindung gelten sämtliche organische Verbindungen, die bei Temperaturen <80°C weder mit Wasser noch mit den Komponenten (A), (B) und (C) reagieren, bei 20°C und 1013 hPa flüssig sind, einen Siedepunkt >250°C bei 1013 hPa aufweisen und ausgewählt sind aus den Stoffgruppen bestehend aus
- vollständig veresterten aromatischen oder aliphatischen Carbonsäuren,
- vollständig veresterten Derivaten der Phosphorsäure,
- vollständig veresterten Derivaten Sulfonsäuren,
- verzweigten oder unverzweigten gesättigten Kohlenwasserstoffen,
- Polystyrolen,
- Polybutadienen,
- Polyisobutylenen,
- Polyestern und
- Polyethern.

Beispiele für nicht reaktive Weichmacher (D) sind Phthalsäureester, wie z.B. Dioctylphthalat, Diisooctylphthalat und Diundecylphthalat; perhydrierte Phthalsäureester, wie z.B. 1,2-Cyclohexandicarbonsäurediisononylester und 1,2-Cyclohexandicarbonsäuredioctylester; Adipinsäureester, wie z.B. Dioctyladipat; Benzoesäureester; Ester der Trimellitsäure, Glycolester; Ester gesättigter Alkandiole, wie z.B. 2,2,4-Trimethyl-1,3-pentandiolmonoisobutyrate und 2,2,4-Trimethyl-1,3-pentandioldiisobutyrate; Phosphorsäureester; Sulfonsäureester; Polyester; Polyether, wie z.B. Polyethylenglycole, Poly-THF und Polypropylenglycole mit Molmassen von vorzugsweise 200 bis 22 000 g/mol; Polystyrole; Polybutadiene; Polyisobutylene; paraffinische Kohlenwasserstoffe und hochmolekulare, verzweigte Kohlenwasserstoffe.

Bevorzugt werden als Komponente (D) phthalsäurefreie Weichmacher, wie perhydrierte Phthalsäureester, Ester der Trimellitsäure, Polyester oder Polyether, eingesetzt.

Bevorzugt werden Weichmacher (D) mit Molmassen, bzw. im Falle polymerer Weichmacher mittlerer Molmassen Mₙ, von größer 200 g/mol, besonders bevorzugt von größer 500 g/mol, insbesondere von größer 900 g/mol, eingesetzt. Vorzugsweise besitzen sie Molmassen bzw. mittlere Molmassen Mn von maximal 20 000 g/mol, besonders bevorzugt von maximal 10 000 g/mol, insbesondere höchstens 8 000 g/mol.

Besonders bevorzugt handelt es sich bei Weichmacher (D) um Polyether, insbesondere um Polyethylenglycole, Poly-THF und Polypropylenglycole, ganz besonders bevorzugt um Polypropylenglycole. Die bevorzugten Polyether (D) weisen dabei Molmassen vorzugsweise zwischen 400 und 22 000 g/mol, besonders bevorzugt zwischen 800 und 12 000 g/mol, insbesondere zwischen 1 000 und 8 000 g/mol, auf.

Falls die erfindungsgemäßen Massen Weichmacher (D) enthalten, handelt es sich um Mengen von vorzugsweise 10 bis 200 Gewichtsteilen, besonders bevorzugt 20 bis 100 Gewichtsteilen, insbesondere 30 bis 80 Gewichtsteilen, jeweils bezogen auf 100 Gewichtsteile der Komponente (A). Die erfindungsgemäßen Massen enthalten bevorzugt Weichmacher (D).

Bei den in den erfindungsgemäßen Massen gegebenenfalls eingesetzten Füllstoffen (E) kann es sich um beliebige, bisher bekannte Füllstoffe handeln.

Beispiele für Füllstoffe (E) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, hohlkugelförmiger Füllstoffe, wie keramische Mikrokugel, elastische Kunststoffkugeln, Glaskugeln oder faserförmige Füllstoffe. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (E) um Calciumcarbonat, Talkum, Aluminiumtrihydroxid sowie Kieselsäure. Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (E) haben einen Feuchtigkeitsgehalt von bevorzugt unter 1 Gew.-%, besonders bevorzugt von unter 0,5 Gew.-%.

Falls die erfindungsgemäßen Massen Füllstoffe (E) enthalten, handelt es sich um Mengen von vorzugsweise 10 bis 1000 Gewichtsteilen, besonders bevorzugt 40 bis 500 Gewichtsteilen, insbesondere 80 bis 300 Gewichtsteilen, jeweils bezogen auf 100 Gewichtsteile Bestandteil (A). Die erfindungsgemäßen Massen enthalten bevorzugt Füllstoffe (E).

In einer besonders bevorzugten Ausführung der Erfindung enthalten die erfindungsgemäßen Massen als Füllstoffe (E) eine Kombination aus
a) Kieselsäure, insbesondere pyrogene Kieselsäure, und
b) Calciumcarbonat, Aluminiumtrihydroxid und/oder Talkum.

Falls die erfindungsgemäßen Massen diese besonders bevorzugte Kombination verschiedener Füllstoffe (E) enthalten, enthalten sie vorzugsweise 1 bis 50 Gewichtsteile, besonders bevorzugt 5 bis 20 Gewichtsteile, Kieselsäure, insbesondere pyrogene Kieselsäure, und vorzugsweise 10 bis 500 Gewichtsteile, besonders bevorzugt 50 bis 300 Gewichtsteile, Calciumcarbonat, Aluminiumtrihydroxid, Talkum oder Mischungen aus diesen Materialien, jeweils bezogen auf 100 Gewichtsteile Bestandteil (A).

In einer weiteren besonders bevorzugten Ausführung der Erfindung enthalten die erfindungsgemäßen Massen als Füllstoffe (E) ausschließlich Calciumcarbonat, Aluminiumtrihydroxid und/oder Talkum in Mengen von vorzugsweise insgesamt 10 bis 500 Gewichtsteilen, besonders bevorzugt 50 bis 300 Gewichtsteilen, jeweils bezogen auf 100 Gewichtsteile Bestandteil (A).

Bei den in den erfindungsgemäßen Massen gegebenenfalls eingesetzten Haftvermittlern (F) kann es sich um beliebige, bisher in durch Silankondensation härtenden Systemen beschriebene Haftvermittler handeln.

Beispiele für Haftvermittler (F) sind Epoxysilane, wie Glycidoxypropyltrimethoxysilane, Glycidoxypropyl-methyldimethoxysilan, Glycidoxypropyltriethoxysilan oder Glycidoxypropyl-metyhldiethoxysilan, 2-(3-Triethoxysilylproypl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyl-dimethoxysilymethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyltrimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethylmethyldimethoxysilane, Acryloxymethyl-triethoxysilan und Acryloxymethyl-methyldiethoxysilan sowie deren Teilkondensate.

Falls die erfindungsgemäßen Massen Haftvermittler (F) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile vernetzbare Masse.

Bei den in den erfindungsgemäßen Massen gegebenenfalls eingesetzten Siliconharzen (G) handelt es sich vorzugsweise um Phenylsiliconharze.

Besonders bevorzugte handelt es sich bei den erfindungsgemäß gegebenenfalls eingesetzten Siliconharzen (G) um solche, die zu 80%, vorzugsweise zu 90%, insbesondere ausschließlich, aus T-Einheiten der Formeln PhSiO_{3/2}, PhSi (OR⁶)O_{2/2} und/oder PhSi (OR⁶)₂O_{1/2} bestehen, wobei Ph für Phenylrest und R⁶ für Wasserstoffatom oder gegebenenfalls mit Halogenatomen substituierte Alkylreste mit 1 bis 10 Kohlenstoffatomen, bevorzugt für unsubstituierte Alkylreste mit 1 bis 4 Kohlenstoffatomen, stehen, jeweils bezogen auf die Gesamtzahl an Einheiten.

Vorzugsweise besitzen die erfindungsgemäß gegebenenfalls eingesetzten Siliconharze (G) eine mittlere Molmasse (Zahlenmittel) Mₙ von mindestens 400 g/mol und besonders bevorzugt von mindestens 600 g/mol. Die mittlere Molmasse Mₙ liegt vorzugsweise bei höchstens 400 000 g/mol, besonders bevorzugt bei höchstens 10 000 g/mol, insbesondere bei höchstens 3 000 g/mol.

Die erfindungsgemäß eingesetzten Siliconharze (G) können bei 23°C und 1000 hPa sowohl fest als auch flüssig sein, wobei Siliconharze (G) bevorzugt flüssig sind. Vorzugsweise besitzen die Siliconharze (G) eine Viskosität von 10 bis 100 000 mPas, vorzugsweise von 50 bis 50 000 mPas, insbesondere von 100 bis 20 000 mPas.

Die Siliconharze (G) können sowohl in reiner Form als auch in Form einer Mischung mit einem geeigneten Lösungsmittel eingesetzt werden, wobei ein Einsatz in reiner Form jedoch bevorzugt wird.

Beispiele für als Komponenten (G) einsetzbare Phenylsiliconharze sind handelsübliche Produkte, z.B. verschiedene SILRES^{®}-Typen der Fa. Wacker Chemie AG, wie SILRES^{®} IC 368, SILRES^{®} IC 678 oder SILRES^{®} IC 231, SILRES^{®} SY231.

Falls die erfindungsgemäßen Massen die Komponente (G) enthalten, handelt es sich vorzugsweise um Mengen von mindestens 1 Gewichtsteil, besonders bevorzugt mindestens 5 Gewichtsteilen, insbesondere mindestens 10 Gewichtsteilen und vorzugsweise höchstens 1000 Gewichtsteilen, besonders bevorzugt höchstens 500 Gewichtsteilen, insbesondere höchstens 300 Gewichtsteilen, jeweils bezogen auf 100 Gewichtsteile der Mischung (A).

Bei den in den erfindungsgemäßen Massen gegebenenfalls eingesetzten Katalysatoren (H) kann es sich um beliebige, bisher bekannte Katalysatoren für durch Silankondensation härtende Massen handeln.

Beispiele für metallhaltige Härtungskatalysatoren (H) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide und entsprechende Dioctylzinnverbindungen.

Beispiele für metallfreie Härtungskatalysatoren (H) sind basische Verbindungen, wie Triethylamin, Tributylamin, 1,4-Diazabicyclo[2,2,2]octan, 1,5-Diazabicyclo[4.3.0]non-5-en, 1,8-Diaza-bicyclo[5.4.0]undec-7-en, N,N-Bis-(N,N-dimethyl-2-aminoethyl)-methylamin, Pentamethylguanidin, Tetramethylguanidin sowie weitere Guanidinderivate, N,N-Dimethylcyclohexylamin, N,N-Dimethylphenylamin und N-Ethylmorpholinin.

Ebenfalls als Katalysator (H) können saure Verbindungen eingesetzt werden, wie Phosphorsäure und ihre Teilester, Toluolsulfonsäure, Schwefelsäure, Salpetersäure oder auch organische Carbonsäuren, z.B. Essigsäure und Benzoesäure.

In einer Ausführung der Erfindung handelt es sich bei den gegebenenfalls eingesetzten Katalysatoren (H) um metallhaltige Härtungskatalysatoren, bevorzugt um zinnhaltige Katalysatoren. Diese Ausführungsform der Erfindung ist insbesondere dann bevorzugt, wenn die Komponente (A) ganz oder zumindest teilweise, d.h. zu mindestens 90% Gew.-%, vorzugsweise zu mindestens 95 Gew.-%, aus Verbindungen der Formel (I) besteht, in denen b ungleich 1 ist.

Falls die erfindungsgemäßen Massen Katalysatoren (H) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Bestandteil (A).

Wenn die Komponente (A) ganz oder zumindest teilweise, d.h. zu mindestens 20 Gew.-%, vorzugsweise zu mindestens 40 Gew.-%, aus Verbindungen der Formel (I) besteht, in denen b gleich 1 ist, wird vorzugsweise kein Katalysator (H) eingesetzt. Wenn die Komponente (A) hingegen ganz oder zumindest teilweise, d.h. zu mindestens 90 Gew.-%, vorzugsweise zu mindestens 95 Gew.-%, aus Verbindungen der Formel (I) besteht, in denen b ungleich 1 ist, wird vorzugsweise Katalysator (H) eingesetzt.

Bei den in den erfindungsgemäßen Massen gegebenenfalls eingesetzten Additiven (I) kann es sich um beliebige, bisher bekannte für silanvernetzende Systeme typische Additive handeln.

Bei den erfindungsgemäß gegebenenfalls eingesetzten Additiven (I) handelt es sich bevorzugt um Antioxidantien, UV-Stabilisatoren, wie z.B. sog. HALS-Verbindungen, Fungizide und Pigmente.

Falls die erfindungsgemäßen Massen Additive (I) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile Bestandteil (A). Die erfindungsgemäßen Massen enthalten bevorzugt Additive (I).

Bei den erfindungsgemäß gegebenenfalls eingesetzten Zuschlagsstoffen (J) handelt es sich bevorzugt um Tetraalkoxysilane, z.B. Tetraethoxysilan und/oder deren Teilkondensate, Reaktivweichmacher, Rheologieadditive, Flammschutzmittel und organische Lösungsmittel.

Bevorzugte Reaktivweichmacher (J) sind Verbindungen, die Alkylketten mit 6 bis 40 Kohlenstoffatome enthalten und eine gegenüber den Verbindungen (A) reaktive Gruppe besitzen, besonders bevorzugt Trialkoxysilane mit SiC-gebundenen Alkylgruppen mit 6 bis 40 Kohlenstoffatomen. Beispiele sind Isooctyltrimethoxysilan, Isooctyltriethoxysilan, N-Octyltrimethoxysilan, N-Octyltriethoxysilan, Decyltrimethoxysilan, Decyltriethoxysilan, Dodecyltrimethoxysilan, Dodecyltriethoxysilan, Tetradecyltrimethoxysilan, Tetradecyltriethoxysilan, Hexadecyltrimethoxysilan sowie Hexadecyltriethoxysilan.

Bei den Rheologieadditiven (J) handelt es sich bevorzugt um Polyamidwachse, hydrierte Rizinusöle oder Stearate.

Als Flammschutzmittel (J) können alle typischen Flammschutzmittel eingesetzt werden, wie sie für Kleb- und Dichtstoffsysteme typisch sind, insbesondere halogenierte Verbindungen und Derivate.

Beispiele für organische Lösungsmittel (J) sind niedermolekulare Ether, Ester, Ketone, aromatische und aliphatische sowie gegebenenfalls halogenhaltige Kohlenwasserstoffe und Alkohole, wobei letztere bevorzugt werden.

Den erfindungsgemäßen Massen werden vorzugsweise keine organischen Lösungsmitteln (J) zugesetzt.

Falls die erfindungsgemäßen Massen eine oder mehrere Komponenten (J) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile Komponente (A).

Besonders bevorzugt handelt es sich bei den erfindungsgemäßen Massen um solche enthaltend
(A) 100 Gewichtsteile Verbindungen der Formel (I),
(B) 0,8 bis 30 Gewichtsteile Phenyltrimethoxysilan,
(C) 0,3 bis 20 Gewichtsteile stickstoffhaltige Organosiliciumverbindungen enthaltend Einheiten der Formel (III), gegebenenfalls
(D) Weichmacher,
(E) 50 bis 500 Gewichtsteile Füllstoffe,
   gegebenenfalls
(F) Haftvermittler,
   gegebenenfalls
(G) Phenylsiliconharze,
   gegebenenfalls
(H) Katalysatoren,
   gegebenenfalls
(I) Additive und
   gegebenenfalls
(J) Zuschlagstoffe,
wobei die erfindungsgemäßen Massen weniger als 0,1 Gew.-% Vinyltrimethoxysilan, bezogen auf das Gesamtgewicht der erfindungsgemäßen Masse, enthalten.

Insbesondere handelt es sich bei den erfindungsgemäßen Massen um solche enthaltend
(A) 100 Gewichtsteile Verbindungen der Formel (I) mit Y gleich Polyurethanreste oder Polyoxyalkylenreste,
(B) 0,8 bis 30 Gewichtsteile Phenyltrimethoxysilan,
(C) 0,3 bis 10 Gewichtsteile stickstoffhaltige Silane der Formel (III),
   gegebenenfalls
(D) Weichmacher,
(E) 50 bis 500 Gewichtsteile Füllstoffe, ausgewählt aus Calciumcarbonat, Talkum, Aluminiumtrihydroxid sowie Kieselsäure, gegebenenfalls
(F) Haftvermittler,
   gegebenenfalls
(G) Phenylsiliconharze,
   gegebenenfalls
(H) Katalysatoren,
   gegebenenfalls
(I) Additive und
   gegebenenfalls
(J) Zuschlagstoffe,
wobei die erfindungsgemäßen Massen weniger als 0,1 Gew.-% Vinyltrialkoxysilan, bezogen auf das Gesamtgewicht der erfindungsgemäßen Masse, enthalten.

Die erfindungsgemäßen Massen enthalten außer den genannten Komponenten (A) bis (J) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Massen handelt es sich bevorzugt um flüssige bis pastöse Massen mit Viskositäten von bevorzugt 5 000 und 1 000 000 mPas, besonders bevorzugt von 10 000 und 500 000 mPas, jeweils bei 25°C.

Je nach Anwendung der erfindungsgemäßen Massen, die wahlweise pastöse oder aber fließfähige Formulierungen erfordern, werden dabei unterschiedliche Methoden zur Viskositätsbestimmung angewendet. Pastöse Masse unterscheiden sich von fließfähigen Massen durch die Tatsache, dass sie auch im nicht ausgehärteten Zustand ohne Anwendung äußerer Scherkräfte kein Fließverhalten und somit auch keine Formveränderung eines ausgebrachten Massekörpers zeigen. Fließfähige Massen hingegen fließen auch ohne Anwendung äußerer Scherkräfte.

Die Viskosität von pastösen Massen, wie Klebstoffen und Fugendichtstoffen, wird entsprechend der DIN EN ISO 3219 nach einer Temperierung auf 25°C mit einem Kegel-Platte-Viskosimeter (MCR3XX der Fa. A. Paar), bei Umdrehungsgeschwindigkeiten 10 Hz bestimmt.

Die Viskosität von fließfähig Massen, vorzugsweise Dichtstoffe, insbesondere für flächige Abdichtungen, wird nach einer Temperierung auf 23°C mit einem DV 3 P-Rotationsviskosimeter von Fa. A. Paar (Brookfieldsysteme), unter Verwendung von Spindel 6 bei 50 Hz entsprechend der ISO 2555 bestimmt.

Die Herstellung der erfindungsgemäßen Massen kann nach beliebiger und an sich bekannter Art und Weise erfolgen, wie etwa nach Methoden und Mischverfahren, wie sie zur Herstellung von feuchtigkeitshärtenden Zusammensetzungen üblich sind. Die Reihenfolge, in der die verschiedenen Bestandteile miteinander vermischt werden, kann dabei beliebig variiert werden.

Ein weiterer Gegenstand der vorliegenden Erfindung ist ein Verfahren zur Herstellung der erfindungsgemäßen Zusammensetzung durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit.

Das erfindungsgemäße Verfahren kann kontinuierlich, diskontinuierlich oder semikontinuierlich durchgeführt werden.

Bei den erfindungsgemäßen Massen handelt es sich bevorzugt um einkomponentige vernetzbare Massen. Die erfindungsgemäßen Massen können aber auch Teil von zweikomponentigen Vernetzungssystemen sein, bei denen in einer zweiten Komponente OH-haltige Verbindungen, wie Wasser, hinzugefügt werden.

Die erfindungsgemäßen Massen sind bei Ausschluss von Wasser lagerfähig und bei Zutritt von Wasser vernetzbar.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C, und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Bei den erfindungsgemäßen Formkörpern kann es sich um beliebige Formkörper handeln, wie etwa Dichtungen, Pressartikel, extrudierte Profile, Beschichtungen, Imprägnierungen, Verguss, Linsen, Prismen, polygone Strukturen, Laminat- oder Klebschichten.

Ein weiterer Gegenstand der Erfindung ist ein Verfahren zur Herstellung von Materialverbunden, bei denen die erfindungsgemäße Masse auf mindestens ein Substrat aufgebracht und anschließend vernetzen gelassen wird.

Beispiele hierfür sind Beschichtungen, Verguss, die Herstellung von Formartikeln, Verbundmaterialien und Verbundformteile. Unter Verbundformteilen soll hier ein einheitlicher Formartikel aus einem Verbundmaterial verstanden werden, der aus einem Vernetzungsprodukt der erfindungsgemäßen Massen und mindestens einem Substrat so zusammengesetzt ist, dass zwischen den beiden Teilen eine feste, dauerhafte Verbindung besteht.

Beim erfindungsgemäßen Verfahren zur Herstellung von Materialverbunden kann die erfindungsgemäße Masse auch zwischen mindestens zwei gleichen oder verschiedenen Substraten vulkanisiert werden, wie z.B. bei Verklebungen, Laminaten oder Einkapselungen.

Beispiele für Substrate, die erfindungsgemäß verklebt oder abgedichtet werden können, sind Kunststoffe inkl. PVC, Beton, Holz, mineralische Untergründe, Metalle, Dachpappen, Fasergewebe, Glas, Keramik und lackierte Oberflächen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen.

Weiterhin eignen sich die erfindungsgemäßen Massen zum Abdichten von Oberflächen gegen das Eindringen von Wasser. Sie eignen sich zum Abdichten von Oberflächen von äußeren Gebäudeflächen, inneren Gebäudeflächen (z.B. in Feuchträumen, wobei die beschichteten Oberflächen danach auch noch mit Fliesen oder sonstigen dekorativen Materialien belegt werden können), Dächern und ähnlichem. Bei einer Verwendung zur Abdichtung von Flächen werden die erfindungsgemäßen Massen vorzugsweise in einer Schichtdicke von 0,1 bis 5 mm aufgetragen. Sie sind dabei vorzugsweise so niederviskos, dass die Applikation mittels Pinsel, Roller, Rakel oder kommerziellen Sprühgeräten wie Airless-Geräten erfolgen kann. Vorzugsweise zeigen die erfindungsgemäßen Massen für das Abdichten von Flächen ein thixotropes Verhalten, so dass sie sowohl auf horizontalen als auch vertikalen Flächen appliziert werden können.

Ferner eignen sich die erfindungsgemäßen Massen als Klebstoffe oder Verkittungsmassen, z.B. im Fensterbau oder bei der Herstellung von Vitrinen, sowie z.B. zur Herstellung von Schutzüberzügen oder das Gleiten verhindernden Überzügen oder von gummielastischen Formkörpern sowie für die Isolierung von elektrischen oder elektronischen Vorrichtungen.

Die erfindungsgemäßen Massen haben den Vorteil, dass sie leicht herzustellen sind.

Die erfindungsgemäßen vernetzbaren Massen haben den Vorteil, dass sie sich durch eine sehr hohe Lagerstabilität und eine hohe Vernetzungsgeschwindigkeit auszeichnen.

Ferner haben die erfindungsgemäßen vernetzbaren Massen den Vorteil, dass sie ein ausgezeichnetes Haftungsprofil aufweisen.

Des Weiteren haben die erfindungsgemäßen vernetzbaren Massen den Vorteil, dass leicht zu verarbeiten sind.

Ferner haben die erfindungsgemäßen Massen den Vorteil, dass das eingesetzte Phenyltrialkoxysilan, insbesondere das Phenyltrimethoxysilan, bei einer hohen Reaktivität eine geringe Flüchtigkeit aufweist.

Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiel 1: Herstellung einer Masse für einen elastischen Klebstoff mit hoher Shore-Härte

135,0 g silanterminiertes Polypropylenglycol mit einer mittleren Molmasse (Mₙ) von 18000 g/mol und Endgruppen der Formel -O-C(=O)-NH-CH₂-SiCH₃(OCH₃)₂ (käuflich erhältlich unter der Bezeichnung GENIOSIL^{®} STP-E30 bei der Wacker Chemie AG, D-München) werden in einem Laborplanetenmischer der Fa. PC-Laborsystem, ausgestattet mit zwei Balkenmischern, bei ca. 25°C mit 8,0 g Phenyltrimethoxysilan, 4,0 g *N*-(Methyldimethoxysilyl)-methyl-*O-*methyl-carbamat (käuflich erhältlich unter der Bezeichnung GENIOSIL^{®} XL 65 bei der Fa. Wacker Chemie AG, D-München), 4,0 g 3-Glycidoxypropyltrimethoxysilan und 2,0 g einer Stabilisatormischung (unter der Bezeichnung TINUVIN^{®} B 75 bei der BASF SE, Deutschland, käuflich erhältliche Mischung aus 20% Irganox^{®} 1135 (CAS-Nr. 125643-61-0), 40% Tinuvin^{®} 571 (CAS-NR. 23328-53-2) und 40% Tinuvin^{®} 765 (CAS-NR. 41556-26-7)) für 2 Minuten bei 200 U/min homogenisiert. Danach werden 231,0 g Kreide mit einer BET-Oberfläche von ca. 5 m²/g und einem Gehalt an Partikeln mit einem Durchmesser von über 10 µm von unter 1,5% (käuflich erhältlich unter der Bezeichnung "Carbital^{™} 110" bei der Fa. I-mersys) und 6,0 g einer hydrophoben pyrogenen Kieselsäure mit einer BET-Oberfläche von ca. 200 m²/g (käuflich erhältlich unter der Bezeichnung HDK^{®} H18 bei der Wacker Chemie AG, D-München) unter Rühren eine Minute bei 600 U/min aufgeschlossen. Danach werden 10,0 g Aminopropyl-trimethoxysilan für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die Formulierung wird in 310 ml PE-Kartuschen abgefüllt und einen Tag bei 25°C vor der Untersuchung gelagert.

### Vergleichsbeispiel 1: Herstellung einer Masse für einen elastischen Klebstoff mit hoher Shore-Härte

Es wird ebenso vorgegangen wie in Beispiel 1, allerdings werden anstelle von 8 g Phenyltrimethoxysilan 8 g Vinyltrimethoxysilan eingesetzt.

### Beispiel 2: Herstellung einer Masse für einen elastischen Klebstoff mit mittlerer Shore-Härte

50,0 g silanterminiertes Polypropylenglycol mit einer mittleren Molmasse (Mₙ) von 12000 g/mol und Endgruppen der Formel -O-C(=O)-NH-CH₂-SiCH₃(OCH₃)₂ (käuflich erhältlich unter der Bezeichnung GENIOSIL^{®} STP-E10 bei der Wacker Chemie AG, D-München), 50,0 g silanterminiertes Polypropylenglycol mit einer mittleren Molmasse (Mₙ) von 18000 g/mol und Endgruppen der Formel -O-C(=O)-NH-(CH₂)₃-Si(OCH₃)₃ (käuflich erhältlich unter der Bezeichnung GENIOSIL^{®} STP-E35 bei der Wacker Chemie AG, D-München) und 50,8 g eines Polypropylenglycols mit einer mittleren Molmasse Mₙ von 2000 g/mol werden vermischt und in einem Laborplanetenmischer der Fa. PC-Laborsystem, ausgestattet mit zwei Balkenmischern, bei ca. 25°C mit 8,0 g Phenyltrimethoxysilan und 2,0 g einer Stabilisatormischung (käuflich erhältlich unter der Bezeichnung TINUVIN^{®} B 75 bei der BASF SE, Deutschland) für 2 Minuten bei 200 U/min homogenisiert. Danach werden 223,2 g Kreide mit einer BET-Oberfläche von 3 m²/g und einem d50-Wert von 0,45 µm (käuflich unter der Bezeichnung "Imerseal 50" bei der Fa. Imerys) und 12,0 g einer hydrophoben pyrogenen Kieselsäure mit einer BET-Oberfläche von ca. 200 m²/g (käuflich erhältlich unter der Bezeichnung HDK^{®} H18 bei der Wacker Chemie AG, D-München) unter Rühren eine Minute bei 600 U/min aufgeschlossen. Danach werden 4,0 g Aminopropyl-trimethoxysilan für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die Formulierung wird in 310 ml PE-Kartuschen abgefüllt und einen Tag bei 25°C vor der Untersuchung gelagert.

### Vergleichsbeispiel 2: Herstellung einer Masse für einen elastischen Klebstoff mit mittlerer Shore-Härte

Es wird ebenso vorgegangen wie in Beispiel 2, allerdings werden anstelle von 8 g Phenyltrimethoxysilan 8 g Vinyltrimethoxysilan eingesetzt.

### Beispiel 3: Herstellung einer Masse für einen transparenten elastischen Klebstoff mit niedriger Shore-Härte

101,0 g silanterminiertes Polypropylenglycol mit einer mittleren Molmasse (Mₙ) von 12000 g/mol und Endgruppen der Formel -O-C(=O)-NH-CH₂-SiCH₃(OCH₃)₂ (käuflich erhältlich unter der Bezeichnung GENIOSIL^{®} STP-E10 bei der Wacker Chemie AG, D-München), 101 g silanterminiertes Polypropylenglycol mit einer mittleren Molmasse (Mₙ) von 18000 g/mol und Endgruppen der Formel -O-C(=O)-NH-(CH₂)₃-Si(OCH₃)₃ (käuflich erhältlich unter der Bezeichnung GENIOSIL^{®} STP-E35 bei der Fa. Wacker Chemie AG, D-München) und 139,6 g Cyclohexan-1,2-dicarbonsäurediisononylester (käuflich erhältlich unter der Bezeichnung "Hexamoll DINCH" bei der BASF AG) werden vermischt und in einem Laborplanetenmischer der Fa. PC-Laborsystem, ausgestattet mit zwei Balkenmischern, bei ca. 25°C mit 8,0 g Phenyltrimethoxysilan, 1,2 g Stabilisator (käuflich erhältlich unter der Bezeichnung TINUVIN^{®} 123 bei der BASF SE, Deutschland; CAS-NR: 129757-67-1) und 3,2 g Stabilisator (käuflich erhältlich unter der Bezeichnung Hostavin^{®} 3206 bei der Clariant, Schweiz; CAS-NR: 82493-14-9) für 2 Minuten bei 200 U/min homogenisiert. Danach werden 19,0 g einer hydrophoben pyrogenen Kieselsäure mit einer BET-Oberfläche von ca. 200 m²/g (käuflich erhältlich unter der Bezeichnung HDK^{®} H18 bei der Wacker Chemie AG, D-München) und 19,0 g einer hydrophilen pyrogenen Kieselsäure mit einer BET-Oberfläche von ca. 200 m²/g (käuflich erhältlich unter HDK^{®} N20 bei der Wacker Chemie AG, D-München) unter Rühren eine Minute bei 600 U/min aufgeschlossen. Danach werden 8,0 g Aminopropyl-trimethoxysilan für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die Formulierung wird in 310 ml PE-Kartuschen abgefüllt und einen Tag bei 25°C vor der Untersuchung gelagert.

### Vergleichsbeispiel 3: Herstellung einer Masse für einen transparenten elastischen Klebstoff mit niedriger Shore-Härte

Es wird ebenso vorgegangen wie in Beispiel 3, allerdings werden anstelle von 8 g Phenyltrimethoxysilan 8 g Vinyltrimethoxysilan eingesetzt.

### Eigenschaften der Klebstoffe

Die in den Beispielen 1 bis 3 sowie den korrespondierenden Vergleichsbeispielen 1 bis 3 erhaltenen Massen wurden vernetzen gelassen und hinsichtlich ihrer Hautbildung, ihrer mechanischen Eigenschaften und ihrer Lagerstabilität untersucht. Die Ergebnisse finden sich in Tabelle 1.

### Hautbildungszeit (HBZ)

Zur Bestimmung der Hautbildungszeit werden die in den Beispielen erhaltenen vernetzbaren Massen in einer 2 mm dicken Schicht auf PE-Folie aufgetragen und bei Normklima (23°C und 50% relative Luftfeuchtigkeit) gelagert. Während des Aushärtens wird alle 5 min die Bildung einer Haut getestet. Dazu wird ein trockener Laborspatel vorsichtig auf die Oberfläche der Probe aufgesetzt und nach oben gezogen. Bleibt Probe am Finger kleben, hat sich noch keine Haut gebildet. Bleibt keine Probe am Finger mehr kleben, so hat sich eine Haut gebildet und die Zeit wird notiert.

### Viskosität der nicht ausgehärteten Klebstoffe

Die Viskosität der pastösen und thixotropen Klebstoffe wird entsprechend der DIN EN ISO 3219 nach einer Temperierung auf 25°C mit einem Kegel-Platte-Viskosimeter (MCR3XX der Fa. A. Paar), bei Umdrehungsgeschwindigkeiten von 1 Hz und 10 Hz bestimmt.

### Lagerstabilität

Die entsprechenden Kartuschen werden für die jeweils angegebenen Zeiträume bei 70°C gelagert. Anschließend wird wie oben beschrieben die Hautbildungszeit bestimmt.

### Mechanische Eigenschaften der ausgehärteten Klebstoffe

Die Massen wurden jeweils auf ausgefrästen Teflonplatten mit 2 mm Tiefe ausgestrichen und 2 Wochen bei 23°C, 50 rel. Luftfeuchte gehärtet.

Shore-A-Härte wird gemäß DIN 53505 bestimmt.

Reißfestigkeit wird gemäß DIN 53504-S1 bestimmt.

Reißdehnung wird gemäß DIN 53504-S1 bestimmt.

**Tabelle 1**

| **Masse aus Beispiel** | **1** | **V1** | **2** | **V2** | **3** | **V3** |
|---|---|---|---|---|---|---|
| HBZ [min] | 15 | 16 | 37 | 37 | 45 | 29 |
| Lagerung bei 70 °C: | | | | | | |
| HBZ nach 1 Woche [min] | 23 | 20 | 78 | 65 | 43 | 45 |
| HBZ nach 2 Woche [min] | 24 | 20 | 87 | 73 | 50 | 43 |
| HBZ nach 4 Woche [min] | 24 | 25 | 94 | 70 | 58 | 39 |
| HBZ nach 8 Woche [min] | 23 | 23 | 84 | 77 | 47 | 40 |
| Viskosität 1 Hz [Pas] | 725 | 589 | 1530 | 1431 | 1853 | 1937 |
| Viskosität 10 Hz [Pas] | 237 | 179 | 333 | 273 | 170 | 139 |
| Shore-A-Härte | 76 | 76 | 51 | 55 | 31 | 33 |
| Reißfestigkeit [N/mm²] | 2,9 | 3,4 | 1,9 | 1,8 | 1,7 | 1, 6 |
| Reißdehnung [%] | 100 | 112 | 467 | 390 | 240 | 208 |

Die Massen aus den Vergleichsbeispielen 1 bis 3 zeichnen sich nach ihrer Applikation durch einen intensiven Geruch nach Vinyltrimethoxysilan aus. Dieser Geruch ist auch nach Abschluss der Hautbildung noch für mehrere Stunden deutlich wahrnehmbar. Die erfindungsgemäßen Massen aus den Beispielen 1 bis 3 hingegen sind weitgehend geruchlos.

### Beispiel 4: Herstellung einer Masse für einen elastischen Parkettklebstoff

40,0 g silanterminiertes Polypropylenglycol mit einer mittleren Molmasse (Mₙ) von 12000 g/mol und Endgruppen der Formel -O-C(=O)-NH-CH₂-SiCH₃(OCH₃)₂ (käuflich erhältlich unter der Bezeichnung GENIOSIL^{®} STP-E10 bei der Wacker Chemie AG, D-München) und 60,0 g Cyclohexan-1,2-dicarbonsäurediisononylester (käuflich erhältlich unter der Bezeichnung "Hexamoll DINCH" bei der BASF AG) werden vermischt und in einem Laborplanetenmischer der Fa. PC-Laborsystem, ausgestattet mit zwei Balkenmischern, bei ca. 25°C mit 8,0 g Phenyltrimethoxysilan für 2 Minuten bei 200 U/min homogenisiert. Danach werden 272,0 g Marmorpulver mit einem mittleren Teilchendurchmesser (D50%) von ca. 5 µm (käuflich erhältlich unter der Bezeichnung Omyacarb 5-GU bei der Shiraishi Omya GmbH, AT-Gummern) und 16,0 g einer mit Fettsäure beschichteten gefällten Kreide mit einem mittleren Teilchendurchmesser (D50%) von ca. 0,07 µm (käuflich erhältlich unter der Bezeichnung Hakuenka CCR S10 bei der Shiraishi Omya GmbH, AT-Gummern) unter Rühren eine Minute bei 600 U/min aufgeschlossen. Danach werden 4,0 g Aminopropyl-trimethoxysilan für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die Formulierung wird in 310 ml PE-Kartuschen abgefüllt und einen Tag bei 25°C vor der Untersuchung gelagert.

### Vergleichsbeispiel 4: Herstellung einer Masse für einen elastischen Parkettklebstoff

Es wird ebenso vorgegangen wie in Beispiel 4, allerdings werden anstelle von 8 g Phenyltrimethoxysilan 8 g Vinyltrimethoxysilan eingesetzt.

### Beispiel 5: Herstellung einer Masse für einen hart-elastischen Parkettklebstoff

56,0 g silanterminiertes Polypropylenglycol mit einer mittleren Molmasse (Mₙ) von 12000 g/mol und Endgruppen der Formel -O-C(=O)-NH-(CH₂)₃-Si(OCH₃)₃ (käuflich erhältlich unter der Bezeichnung GENIOSIL^{®} STP-E15 bei der Wacker Chemie AG, D-München) und 56,0 g eines Polypropylenglycols mit einer mittleren Molmasse Mₙ von 2000 g/mol werden vermischt und in einem Laborplanetenmischer der Fa. PC-Laborsystem, ausgestattet mit zwei Balkenmischern, bei ca. 25°C mit 8,0 g Phenyltrimethoxysilan für 2 Minuten bei 200 U/min homogenisiert. Danach werden 259,9 g Marmorpulver mit einem mittleren Teilchendurchmesser (D50%) von ca. 5 µm (käuflich erhältlich unter der Bezeichnung Omyacarb 5-GU bei der Shiraishi Omya GmbH, AT-Gummern) und 16,0 g einer mit Fettsäure beschichteten gefällten Kreide mit einem mittleren Teilchendurchmesser (D50%) von ca. 0,07 µm (käuflich erhältlich unter der Bezeichnung Hakuenka CCR S10 bei der Shiraishi Omya GmbH, AT-Gummern) unter Rühren eine Minute bei 600 U/min aufgeschlossen. Danach werden 4,0 g Aminopropyl-trimethoxysilan und 0,1 g Dioctylzinndilaurat für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die Formulierung wird in 310 ml PE-Kartuschen abgefüllt und einen Tag bei 25°C vor der Untersuchung gelagert.

### Vergleichsbeispiel 5: Herstellung einer Masse für einen hart-elastischen Parkettklebstoff

Es wird ebenso vorgegangen wie in Beispiel 5, allerdings werden anstelle von 8 g Phenyltrimethoxysilan 8 g Vinyltrimethoxysilan eingesetzt.

### Beispiel 6: Herstellung einer Masse für einen hart-elastischen Parkettklebstoff

56,0 g silanterminiertes Polypropylenglycol mit einer mittleren Molmasse (Mₙ) von 18000 g/mol und Endgruppen der Formel -O-C(=O)-NH-(CH₂)₃-Si(OCH₃)₃ (käuflich erhältlich unter der Bezeichnung GENIOSIL^{®} STP-E35 bei der Wacker Chemie AG, D-München) und 60,0 g eines Polypropylenglycols mit einer mittleren Molmasse Mₙ von 2000 g/mol werden vermischt und in einem Laborplanetenmischer der Fa. PC-Laborsystem, ausgestattet mit zwei Balkenmischern, bei ca. 25°C mit 8,0 g Phenyltrimethoxysilan für 2 Minuten bei 200 U/min homogenisiert. Danach werden 251,9 g Marmorpulver mit einem mittleren Teilchendurchmesser (D50%) von ca. 5 µm (käuflich erhältlich unter der Bezeichnung Omyacarb 5-GU bei der Shiraishi Omya GmbH, AT-Gummern) und 20,0 g einer mit Fettsäure beschichteten gefällten Kreide mit einem mittleren Teilchendurchmesser (D50%) von ca. 0,07 µm (käuflich erhältlich unter der Bezeichnung Hakuenka CCR S10 bei der Shiraishi Omya GmbH, AT-Gummern) unter Rühren eine Minute bei 600 U/min aufgeschlossen. Danach werden 4,0 g Aminopropyl-trimethoxysilan und 0,1 g Dioctylzinndilaurat für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die Formulierung wird in 310 ml PE-Kartuschen abgefüllt und einen Tag bei 25°C vor der Untersuchung gelagert.

### Vergleichsbeispiel 6: Herstellung einer Masse für einen hart-elastischen Parkettklebstoff

Es wird ebenso vorgegangen wie in Beispiel 6, allerdings werden anstelle von 8 g Phenyltrimethoxysilan 8 g Vinyltrimethoxysilan eingesetzt.

### Eigenschaften der Parkettklebstoffe

Die in den Beispielen 4 bis 6 sowie den korrespondierenden Vergleichsbeispielen 4-6 erhaltenen Massen wurden vernetzen gelassen und hinsichtlich ihrer Hautbildung und ihrer mechanischen Eigenschaften untersucht. Die Ergebnisse finden sich in Tabelle 2.

Hautbildungszeit, Shore-Härte, Reißfestigkeit und -dehnung wurden dabei bestimmt wie bei den Beispielen 1-3 beschrieben.

### Viskosität der nicht ausgehärteten Klebstoffe

Die Viskosität der pastösen und thixotropen Klebstoffe wird entsprechend der DIN EN ISO 3219 nach einer Temperierung auf 25°C mit einem Kegel-Platte-Viskosimeter (MCR3XX der Fa. A. Paar), bei Umdrehungsgeschwindigkeiten von 0,89 Hz und 25 Hz bestimmt.

### Zugscherfestigkeit

Die Bestimmung der Zugscherfestigkeiten erfolgt wie in der DIN EN 204 beschrieben. Hierbei erfolgt ein Auftrag des Klebstoffes auf beide zu verklebenden Buchenhölzer, welche dann mit einem 100 µm Rakel abgezogen werden. Anschließend erfolgt das Verbinden der beiden Hölzer über eine Fläche von 1 mal 2 cm mit einem Anpressdruck von 5kg. Nach dem Anpressen über einen Zeitraum von 24 Stunden werden die Hölzer im Normklima (25°C, 50% Luftfeuchtigkeit) für den angegebenen Zeitraum gelagert und anschließend vermessen.

**Tabelle 2**

| **Masse aus Beispiel** | **4** | **V4** | **5** | **V5** | **6** | **V6** |
|---|---|---|---|---|---|---|
| HBZ [min] | 33 | 25 | 61 | 31 | 83 | 85 |
| Viskosität 0,89 Hz [Pas] | 99 | 92 | 199 | 151 | 214 | 226 |
| Viskosität 25 Hz [Pas] | 32 | 20 | 66 | 43 | 78 | 81 |
| Shore-A-Härte | 60 | 64 | 66 | 71 | 57 | 61 |
| Reißfestigkeit [N/mm²] | 2,1 | 1,7 | 2,1 | 1,9 | 1,6 | 1,6 |
| Reißdehnung [%] | 76 | 40 | 64 | 55 | 104 | 93 |
| Zugscherfestigkeit nach 3 Tagen [N/mm²] | 2,0 | 2,9 | 2,2 | 2,3 | 1,8 | 2,3 |
| Zugscherfestigkeit nach 28 Tagen [N/mm²] | 2,3 | 2,2 | 3,0 | 2,6 | 2,7 | 3,2 |

Die Massen aus den Vergleichsbeispielen 4 bis 6 zeichnen sich nach ihrer Applikation durch einen intensiven Geruch nach Vinyltrimethoxysilan aus. Dieser Geruch ist auch nach Abschluss der Hautbildung noch für mehrere Stunden deutlich wahrnehmbar. Die erfindungsgemäßen Massen aus den Beispielen 4 bis 6 hingegen sind weitgehend geruchlos.

### Beispiel 7: Herstellung einer Masse abdichtende Beschichtungen

66,7 g silanterminiertes Polypropylenglycol mit einer mittleren Molmasse (Mₙ) von 12000 g/mol und Endgruppen der Formel -O-C(=O)-NH-CH₂-SiCH₃(OCH₃)₂ (käuflich erhältlich unter der Bezeichnung GENIOSIL^{®} STP-E10 bei der Wacker Chemie AG, D-München), 33,3 g silanterminiertes Polypropylenglycol mit einer mittleren Molmasse (Mₙ) von 12000 g/mol und Endgruppen der Formel -O-C(=O)-NH-(CH₂)₃-Si(OCH₃)₃ (käuflich erhältlich unter der Bezeichnung GENIOSIL^{®} STP-E15 bei der Wacker Chemie AG, D-München), 78,4 g Hexadecyltrimethoxysilan (käuflich erhältlich unter dem Namen Silan 25013 VP bei der Wacker Chemie AG, D-München) und 1,6 g *N*-(Methyldimethoxysilyl)-methyl-*O*-methyl-carbamat (käuflich erhältlich unter der Bezeichnung GENIOSIL^{®} XL 65 bei der Wacker Chemie AG, D-München) werden vermischt und in einem Laborplanetenmischer der Fa. PC-Laborsystem, ausgestattet mit zwei Balkenmischern, bei ca. 25°C mit 7,6 g Phenyltrimethoxysilan und einer Stabilisatormischung bestehend aus 0,8 g TINUVIN^{®} 123 (CAS-NR: 129757-67-1; käuflich erhältlich bei der BASF SE, Deutschland), 2,0 g Tinuvin^{®} 571 (CAS-NR. 23328-53-2 käuflich erhältlich bei der BASF SE, Deutschland) und 0,8 g Irganox^{®} 1135 (CAS-Nr. 125643-61-0; käuflich erhältlich bei der BASF SE, Deutschland) für 2 Minuten bei 200 U/min homogenisiert. Danach werden 156,0 g Kreide mit einer BET-Oberfläche von 3 m²/g und einem d50-Wert von 0,45 µm (käuflich unter der Bezeichnung "Imerseal 50" bei der Fa. Imerys), 44,0 g Aluminiumtrihydroxid mit einer BET-Oberfläche von 3-5 m²/g und einem d50-Wert von 1,7-2,1 µm (käuflich erhältlich unter der Bezeichnung Martinal^{®} OL 104 bei der Fa. Albemarle Corp.) und 6,0 g pyrogene Kieselsäure mit einer BET-Oberfläche von ca. 200 m²/g, deren Oberfläche mit Trimethylsiloxygruppen modifiziert ist (käuflich erhältlich unter HDK^{®} H2000 bei der Wacker Chemie AG, D-München) unter Rühren eine Minute bei 600 U/min aufgeschlossen. Dann werden 2,8 g Aminopropyl-trimethoxysilan für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die Formulierung wird in 310 ml PE-Kartuschen abgefüllt und einen Tag bei 25°C vor der Untersuchung gelagert.

### Vergleichsbeispiel 7: Herstellung einer Masse abdichtende Beschichtungen

Es wird ebenso vorgegangen wie in Beispiel 7, allerdings werden anstelle von 7,6 g Phenyltrimethoxysilan 7,6 g Vinyltrimethoxysilan eingesetzt.

### Eigenschaften der Beschichtungen

Die im Beispiel 7 sowie dem korrespondierenden Vergleichsbeispiel 7 erhaltenen Massen wurden vernetzen gelassen und hinsichtlich ihrer Hautbildung und ihrer mechanischen Eigenschaften untersucht. Die Ergebnisse finden sich in Tabelle 3.

Hautbildungszeit, Shore-Härte, Reißfestigkeit und -dehnung wurden dabei bestimmt wie bei den Beispielen 1-3 beschrieben.

### Viskosität der nicht ausgehärteten Klebstoffe

Die Viskosität der nicht pastösen Dichtstoffe wird nach einer Temperierung auf 23°C mit einem DV 3 P-Rotationsviskosimeter von Fa. A. Paar (Brookfieldsysteme), unter Verwendung von Spindel 6 bei 5 Hz und 50 Hz entsprechend der ISO 2555 bestimmt.

**Tabelle 3**

| **Masse aus Beispiel** | **7** | **V7** |
|---|---|---|
| HBZ [min] | 30 | 27 |
| Viskosität 5 Hz [Pas] | 19, 9 | 12,8 |
| Viskosität 50 Hz [Pas] | 5, 6 | 5,4 |
| Shore-A-Härte | 61 | 69 |
| Reißfestigkeit [N/mm²] | 2,2 | 2,1 |
| Reißdehnung [%] | 163 | 171 |

Die Masse aus dem Vergleichsbeispiel 7 zeichnet sich nach ihrer Applikation durch einen intensiven Geruch nach Vinyltrimethoxysilan aus. Dieser Geruch ist auch nach Abschluss der Hautbildung noch für mehrere Stunden deutlich wahrnehmbar. Die erfindungsgemäße Masse aus Beispiel 7 hingegen ist weitgehend geruchlos.

## Patentansprüche

1. Vernetzbare Massen enthaltend
(A) 100 Gewichtsteile Verbindungen der Formel
Y-[(CR¹₂)_{b}-SiRₐ (OR²)₃-ₐ]ₓ (I),
wobei
Y einen x-wertigen, über Stickstoff, Sauerstoff, Schwefel oder Kohlenstoff gebundenen Polymerrest bedeutet,
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist,
(B) mindestens 0,2 Gewichtsteile Phenyltrialkoxysilan der Formel
C₆H₅-Si(OR³)₃ (II),
wobei
R³ gleich oder verschieden sein kann und Methyl- oder Ethylrest bedeutet,
(C) 0,1 bis 30 Gewichtsteile stickstoffhaltige Organosiliciumverbindungen enthaltend Einheiten der Formel
DₑSi(OR⁵)_{d}R⁴_{c}O_{(4-e-d-c)/2} (III),
worin
R⁴ gleich oder verschieden sein kann und einen einwertigen, gegebenenfalls substituierten SiC-gebundenen, von Stickstoff freien organischen Rest bedeutet,
R⁵ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit mindestens einem nicht an eine Carbonylgruppe (C=O) gebundenen Stickstoffatom bedeutet,
c 0, 1, 2 oder 3 ist,
d 1, 2 oder 3 ist und
e 0, 1, 2, 3 oder 4 ist,
mit der Maßgabe, dass die Summe aus c+d+e kleiner oder gleich 4 ist und pro Molekül mindestens ein Rest D anwesend ist,
wobei die vernetzbare Masse weniger als 0,5 Gew.-% Vinyltrimethoxysilan, bezogen auf das Gesamtgewicht der vernetzbaren Masse, enthält,
wobei es sich bei den Massen um solche enthaltend
(A) 100 Gewichtsteile Verbindungen der Formel (I),
(B) 0,5 bis 50 Gewichtsteile Phenyltrimethoxysilan,
(C) 0,2 bis 25 Gewichtsteile stickstoffhaltige Organosiliciumverbindungen enthaltend Einheiten der Formel (III), gegebenenfalls
(D) Weichmacher,
gegebenenfalls
(E) Füllstoffe,
gegebenenfalls
(F) Haftvermittler,
gegebenenfalls
(G) Phenylsiliconharze
gegebenenfalls
(H) Katalysatoren
gegebenenfalls
(I) Additive und
gegebenenfalls
(J) Zuschlagstoffe
handelt,
wobei die erfindungsgemäßen Massen weniger als 0,3 Gew.-% Vinyltrimethoxysilan, bezogen auf das Gesamtgewicht der erfindungsgemäßen Masse, enthalten.

2. Vernetzbare Massen gemäß Anspruch 1, **dadurch gekennzeichnet, dass** es sich bei Rest Y um Polyurethanreste oder Polyoxyalkylenreste handelt.

3. Vernetzbare Massen gemäß einem oder mehreren der Ansprüche 1 bis 2, **dadurch gekennzeichnet, dass** sie
(A) 100 Gewichtsteile Verbindungen der Formel (I),
(B) 0,8 bis 30 Gewichtsteile Phenyltrimethoxysilan,
(C) 0,3 bis 20 Gewichtsteile stickstoffhaltige Organosiliciumverbindungen enthaltend Einheiten der Formel (III), gegebenenfalls
(D) Weichmacher,
(E) 50 bis 500 Gewichtsteile Füllstoffe,
gegebenenfalls
(F) Haftvermittler,
gegebenenfalls
(G) Phenylsiliconharze,
gegebenenfalls
(H) Katalysatoren,
gegebenenfalls
(I) Additive und
gegebenenfalls
(J) Zuschlagstoffe
enthalten,
wobei die erfindungsgemäßen Massen weniger als 0,1 Gew.-% Vinyltrimethoxysilan, bezogen auf das Gesamtgewicht der erfindungsgemäßen Masse, enthalten.

4. Verfahren zur Herstellung der Masse gemäß einem oder mehreren der Ansprüche 1 bis 3 durch Mischen der einzelnen Komponenten in beliebiger Reihenfolge.

5. Verfahren zur Herstellung von Materialverbunden, bei denen die Masse gemäß einem oder mehreren der Ansprüche 1 bis 3 bzw. hergestellt nach Anspruch 4 auf mindestens ein Substrat aufgebracht und anschließend vernetzen gelassen wird.

## Claims

1. Crosslinkable compositions containing
(A) 100 parts by weight of compounds of the formula
Y-[(CR¹₂)_{b}-SiRₐ(OR²)₃₋ₐ]ₓ (I),
where
Y represents an x-valent polymeric moiety attached via nitrogen, oxygen, sulfur or carbon,
R at each occurrence may be the same or different and represents a monovalent, optionally substituted hydrocarbyl moiety,
R¹ at each occurrence may be the same or different and represents a hydrogen atom or a monovalent, optionally substituted hydrocarbyl moiety, which may be attached to the carbon atom via nitrogen, phosphorus, oxygen, sulfur or a carbonyl group,
R² at each occurrence may be the same or different and represents a hydrogen atom or a monovalent, optionally substituted hydrocarbyl moiety,
x is an integer from 1 to 10,
a at each occurrence may be the same or different and is 0, 1 or 2, and
b at each occurrence may be the same or different and is an integer from 1 to 10,
(B) at least 0.2 part by weight of a phenyltrialkoxysilane of the formula
C₆H₅-Si(OR³)₃ (II),
where
R³ at each occurrence may be the same or different and represents methyl or ethyl,
(C) 0.1 to 30 parts by weight of nitrogenous organosilicon compounds containing units of the formula
DₑSi(OR⁵)_{d}R⁴_{c}O_{(4-e-d-c)/2} (III),
where
R⁴ at each occurrence may be the same or different and represents a monovalent, optionally substituted, SiC-bonded organic moiety free of nitrogen,
R⁵ at each occurrence may be the same or different and represents a hydrogen atom or an optionally substituted hydrocarbyl moiety,
D at each occurrence may be the same or different and represents a monovalent SiC-bonded moiety having at least one nitrogen atom not bonded to the carbonyl group (C=O),
c is 0, 1, 2 or 3,
d is 1, 2 or 3, and
e is 0, 1, 2, 3 or 4,
with the proviso that the c+d+e sum is not more than 4 and at least one D moiety is present per molecule,
wherein the crosslinkable composition contains less than 0.5 wt% of vinyltrimethoxysilane, based on the total weight of the crosslinkable composition,
wherein the compositions are those containing
(A) 100 parts by weight of compounds of formula (I),
(B) 0.5 to 50 parts by weight of phenyltrimethoxysilane,
(C) 0.2 to 25 parts by weight of nitrogenous organosilicon compounds containing units of formula (III), optionally
(D) plasticizers,
optionally
(E) fillers,
optionally
(F) adhesion promoters,
optionally
(G) phenylsilicone resins,
optionally
(H) catalysts,
optionally
(I) additives, and
optionally
(J) admixture agents,
wherein the compositions according to the invention contain less than 0.3 wt% of vinyltrimethoxysilane, based on the total weight of the composition according to the invention.

2. Crosslinkable compositions according to Claim 1, **characterized in that** the Y moiety comprises polyurethane moieties or polyoxyalkylene moieties.

3. Crosslinkable compositions according to one or more of Claims 1 and 2, **characterized in that** they contain
(A) 100 parts by weight of compounds of formula (I),
(B) 0.8 to 30 parts by weight of phenyltrimethoxysilane,
(C) 0.3 to 20 parts by weight of nitrogenous organosilicon compounds containing units of formula (III), optionally
(D) plasticizers,
(E) 50 to 500 parts by weight of fillers,
optionally
(F) adhesion promoters,
optionally
(G) phenylsilicone resins,
optionally
(H) catalysts,
optionally
(I) additives, and
optionally
(J) admixture agents,
wherein the compositions according to the invention contain less than 0.1 wt% of vinyltrimethoxysilane, based on the total weight of the composition according to the invention.

4. Method of forming the composition according to one or more of Claims 1 to 3 by mixing the individual components in any order.

5. Method of forming composites, which comprises the composition according to one or more of Claims 1 to 3 or obtained according to Claim 4 being applied atop at least one substrate and then being allowed to crosslink.

## Revendications

1. Masses réticulables contenant :
(A) 100 parties en poids de composés de formule
Y-[(CR¹₂)_{b}-SiRₐ(OR²)₃₋ₐ]ₓ (I)
dans laquelle
Y signifie un radical polymère x-valent, relié par un azote, un oxygène, un soufre ou un carbone,
les R peuvent être identiques ou différents, et représentent un radical hydrocarboné monovalent, éventuellement substitué,
les R¹ peuvent être identiques ou différents, et représentent un atome d'hydrogène ou un radical hydrocarboné monovalent, éventuellement substitué, qui peut être relié à l'atome de carbone par un azote, un phosphore, un oxygène, un soufre ou un groupe carbonyle, les R² peuvent être identiques ou différents, et représentent un atome d'hydrogène ou un radical hydrocarboné monovalent, éventuellement substitué,
x est un nombre entier de 1 à 10,
les a peuvent être identiques ou différents, et représentent 0, 1 ou 2, et
les b peuvent être identiques ou différents, et représentent un nombre entier de 1 à 10,
(B) au moins 0,2 partie en poids d'un phényltrialcoxysilane de formule
C₆H₅-Si(OR³)₃ (II)
dans laquelle
les R³ peuvent être identiques ou différents, et signifient un radical méthyle ou éthyle,
(C) 0,1 à 30 parties en poids de composés d'organosilicium contenant de l'azote contenant des unités de formule
DₑSi(OR⁵)_{d}R⁴_{c}O_{(4-e-d-c)/2} (III)
dans laquelle
les R⁴ peuvent être identiques ou différents, et signifient un radical organique monovalent, éventuellement substitué, relié à SiC, exempt d'azote, les R⁵ peuvent être identiques ou différents, et signifient un atome d'hydrogène ou des radicaux hydrocarbonés éventuellement substitués,
les D peuvent être identiques ou différents, et signifient un radical monovalent relié à SiC, contenant au moins un atome d'azote non relié à un groupe carbonyle (C=O),
c est 0, 1, 2 ou 3,
d est 1, 2 ou 3, et
e est 0, 1, 2, 3 ou 4,
à condition que la somme de c + d + e soit inférieure ou égale à 4 et qu'au moins un radical D soit présent par molécule,
la masse réticulable contenant moins de 0,5 % en poids de vinyltriméthoxysilane, par rapport au poids total de la matière réticulable,
les masses consistant en de telles contenant
(A) 100 parties en poids de composés de formule (I),
(B) 0,5 à 50 parties en poids de phényltriméthoxysilane,
(C) 0,2 à 25 parties en poids de composés d'organosilicium contenant de l'azote contenant des unités de formule (III),
éventuellement
(D) des plastifiants,
éventuellement
(E) des charges,
éventuellement
(F) des promoteurs d'adhérence,
éventuellement
(G) des résines de phénylsilicone,
éventuellement
(H) des catalyseurs,
éventuellement
(I) des additifs et
éventuellement
(J) des adjuvants,
les masses selon l'invention contenant moins de 0,3 % en poids de vinyltriméthoxysilane, par rapport au poids total de la masse selon l'invention.

2. Masses réticulables selon la revendication 1, **caractérisées en ce que** le radical Y consiste en des radicaux polyuréthane ou des radicaux polyoxyalkylène.

3. Masses réticulables selon une ou plusieurs des revendications 1 à 2, **caractérisées en ce qu'**elles contiennent
(A) 100 parties en poids de composés de formule (I),
(B) 0,8 à 30 parties en poids de phényltriméthoxysilane,
(C) 0,3 à 20 parties en poids de composés d'organosilicium contenant de l'azote contenant des unités de formule (III),
éventuellement
(D) des plastifiants,
(E) 50 à 500 parties en poids de charges,
éventuellement
(F) des promoteurs d'adhérence,
éventuellement
(G) des résines de phénylsilicone,
éventuellement
(H) des catalyseurs,
éventuellement
(I) des additifs et
éventuellement
(J) des adjuvants,
les masses selon l'invention contenant moins de 0,1 % en poids de vinyltriméthoxysilane, par rapport au poids total de la masse selon l'invention.

4. Procédé de fabrication de la masse selon une ou plusieurs des revendications 1 à 3 par mélange des composants individuels dans un ordre quelconque.

5. Procédé de fabrication de matériaux composites, selon lequel la masse selon une ou plusieurs des revendications 1 à 3 ou fabriquée selon la revendication 4 est appliquée sur au moins un substrat et puis laissée réticuler.
